# EUROPÄISCHE PATENTSCHRIFT

(11) **EP 3 472 366 B1**
(45) Veröffentlichungstag und Bekanntmachung des Hinweises auf die Patenterteilung: **14.10.2020**
(21) Anmeldenummer: 17736871.9
(22) Anmeldetag: 23.05.2017
(51) Int. Cl.: C23C 4/10, C23C 4/134

(54) **SELBST HEILENDE WÄRMEDÄMMSCHICHTEN SOWIE VERFAHREN ZUR HERSTELLUNG DERSELBEN**
SELF-HEALING HEAT DAMPING LAYERS AND METHOD FOR PRODUCING SAME
COUCHES D'ISOLATION THERMIQUE AUTORÉGÉNÉRATRICES ET PROCÉDÉ DE PRODUCTION DE CELLES-CI

(30) Priorität: 15.06.2016 DE 102016007231
(43) Veröffentlichungstag der Anmeldung: 24.04.2019
(73) Patentinhaber: Forschungszentrum Jülich GmbH, 52425 Jülich (DE)
(72) Erfinder: VASSEN, Robert, 52134 Herzogenrath (DE); KOCH, Denise, 52445 Titz (DE); RAUWALD, Karl-Heinz, 52428 Jülich (DE); SLOOF, Wim G., 2622 DJ Delft (NL)
(86) Internationale Anmeldenummer: PCT/DE2017/000140
(87) Internationale Veröffentlichungsnummer: WO 2017/215687

(56) Entgegenhaltungen:
- Z. DERELIOGLU ET AL: "On the use of B-alloyed MoSi2 particles as crack healing agents in yttria stabilized zirconia thermal barrier coatings", JOURNAL OF THE EUROPEAN CERAMIC SOCIETY., Bd. 35, Nr. 16, 1. Dezember 2015 (2015-12-01), Seiten 4507-4511, XP055396012, GB ISSN: 0955-2219, DOI: 10.1016/j.jeurceramsoc.2015.08.035 in der Anmeldung erwähnt
- Sloof, Wim G.;Turteltaub, Sergio; Carabat, Alexandra; Derelioglu, Z; A Ponnusami, Sathiskumar: "Crack healing in yttria stabilized zirconia thermal barrier coatings", , November 2015 (2015-11), XP002772865, DOI: 10.3233/978-1-61499-514-2-219 Gefunden im Internet: URL:https://www.researchgate.net/publicati on/283314953_Crack_healing_in_yttria_stabi lized_zirconia_thermal_barrier_coatings [gefunden am 2017-08-08] in der Anmeldung erwähnt
- SONOYA K ET AL: "Development of thermal barrier coating system with an intermediate layer containing MoSi2 with superior thermal cyclic properties", 2014 IEEE 8TH INTERNATIONAL POWER ENGINEERING AND OPTIMIZATION CONFERENCE (PEOCO2014), IEEE, 24. März 2014 (2014-03-24), Seiten 13-18, XP032594910, DOI: 10.1109/PEOCO.2014.6814391 [gefunden am 2014-05-12]
- DENGZUN YAO ET AL: "Development and oxidation resistance of air plasma sprayed Mo-Si-Al coating on an Nbss/Nb5Si3 in situ composite", CORROSION SCIENCE., Bd. 52, Nr. 8, 1. August 2010 (2010-08-01) , Seiten 2603-2611, XP055397429, GB ISSN: 0010-938X, DOI: 10.1016/j.corsci.2010.04.008
- Denise Silke Koch: "355 Energie & Umwelt / Energy & Environment Band/ Volume 355 ISBN 978-3-95806-201-6 Energie & Umwelt Energy & Environment Entwicklung selbstheilender Wärmedämmschichten Energie & Umwelt / Energy & Environment Band/ Volume 355 ISBN 978-3-95806-201-6 Entwicklung selbstheilender Wärmedämmschichten", , 24. Januar 2017 (2017-01-24), XP055397317, Gefunden im Internet: URL:http://wwwzb1.fz-juelich.de/contentenr ichment/inhaltsverzeichnisse/2016/verlag/E nergie_Umwelt_355_i.pdf [gefunden am 2017-08-09]

## Beschreibung

Die Erfindung bezieht sich auf das Gebiet der Hochtemperatur-Schutzschichten, insbesondere auf keramische Wärmedämmschichten (WDS), wie sie in Gasturbinen oder Flugzeugturbinen eingesetzt werden.

### Stand der Technik

Ausgangsmaterialien für Hochtemperatursubstrate in einer oxidierenden Umgebung sind in der Regel solche, die kontinuierlich eine thermodynamisch stabile Oxidschicht ausbilden. Diese Oxidschicht dient als Barriere zwischen der Umgebung und dem eigentlichen Hochtemperatursubstrat. Legierungen, die sich als besonders geeignet dafür erwiesen haben, sind unter anderem solche, die eine Aluminiumoxid (Al₂O₃), eine Siliziumdioxid (SiO₂) oder eine Chromoxid (Cr₂O₃) Schicht ausbilden. Dazu gehören beispielsweise Edelstähle, Superlegierungen oder auch intermetallische Phasen MX mit M = Ti, Fe, Co oder Ni und X = Al, Si oder Cr. [1]

Standardmäßig werden die Hochtemperatursubstrate zunächst mit einer Diffusionsschutzschicht als Haftvermittlerschicht versehen, auf die in der Regel eine weitere thermische Schutzschicht (engl. Thermal Barrier coating, TBC) als oberste Schicht angeordnet wird.

Als Standardmaterial für solche TBCs, die auch Wärmedämmschichten genannt werden, wird in der Regel Yttriumoxid-teilstabilisiertes Zirkoniumdioxid (ZrO₂ mit 6 bis 8 Gew.-% Y₂O₃ = YSZ) eingesetzt, da es sowohl sehr gute thermomechanische Eigenschaften aufweist und zudem sehr gut über eine Haftvermittlerschicht an ein Hochtemperatursubstrat gebunden werden kann. [2]

Darüber hinaus sind aber auch weitere keramische Materialien als Wärmedämmschicht geeignet, wie beispielweise Gadoliniumzirkonat oder Zirkoniumdioxid mit weiteren Stabilitätskomponenten wie MgO, CaO oder CeO₂.

Üblicherweise werden derzeitige Wärmedämmschichten mittels Plasmaspritzen oder über EB-PVD (engl. Electron Beam-Physical Vapour Deposition) auf die Hochtempertatursubstrate bzw. die Haftvermittlerschichten aufgebracht. Während über EB-PVD aufgebrachte Schichten vorteilhaft eine säulenförmige Struktur aufweisen und hochbelastbar sind, weisen die gegenüber einer mittels Plasmaspritzen aufgebrachten Schicht allerdings nachteilig eine höhere thermische Leitfähigkeit auf.

Einerseits können während des Betriebs des Bauteils aufgrund der thermischen Belastung in der Wärmedämmschicht Risse entstehen, da YSZ bei hohen Temperaturen eine Phasenumwandlung durchlaufen kann. Zusätzlich kommt es durch die Oxidation der Haftvermittlerschicht häufig zu Rissen in der Wärmedämmschicht.

Wachsen diese Risse zu stark, insbesondere solche parallel zur Grenzfläche, so können diese Risse ein Abplatzen der Wärmedämmschicht zur Folge haben, wodurch das Hochtemperatursubstrat nachteilig nicht mehr geschützt ist.

Aus [3] ist bekannt, dass eine gemischte Schicht aus 70 % Molybdändisilizid (MoSi₂) und 30 % NiCrAlY als Zwischenschicht zwischen einer Haftvermittlerschicht und der Funktionsschicht eine Verbesserung der Lebensdauer bewirken soll.

Als ein weiterer Lösungsansatz wurde von Derelioglu et al. [4] ein Lösungsansatz gewählt, bei dem mit Bor dotiertes MoSi₂ als Opfermaterial in einer YSZ-Wärmedämmschicht eingesetzt wurde, welches thermisch bedingte Risse automatisch heilen sollte. Dabei sollten eingeschlossene MoSi₂(B)-Teilchen, die benachbart zu Rissen liegen, bevorzugt oxidieren und dabei eine amorphe SiO₂-Phase ausbilden, die in die entstehenden Risse eindringen und dort unter Bildung von festem ZrSiO₄ diese wieder auffüllen und verschließen. Der Erfolg der selbstheilenden Wärmedämmschicht hängt dabei stark von der Größe der eingebrachten MoSi₂(B)-Teilchen und deren Verteilung ab.

Bisherige Mischschichten aus YSZ und MoSi₂ zeigten keine Verbesserung der Lebensdauer, sondern im Gegenteil eine Reduktion der Lebensdauer und ein frühes Abplatzen der Wärmedämmschicht.

Die selbstheilenden Eigenschaften konnten jedoch in [4] exemplarisch gezeigt werden, in dem in eine Schicht aus YSZ und MoSi₂ ein Riss induziert wurde und dieser nach einer Wärmebehandlung verschlossen war.

Zudem hat sich herausgestellt, dass MoSi₂ sehr oxidationsanfällig ist. Um eine vorzeitige Oxidation der MoSi₂-Teichen zu verhindern, wurde von Sloof et al. [5] vorgeschlagen, dass diese vorab mit einer Schutzhülle umgeben werden sollten, die einerseits vor einer Oxidation schützen, andererseits aber eine Rissbildung durch diese Schutzhülle erlaubt und für diesen Fall auch eine Oxidation des MoSi₂ zulässt. Als besonders geeignete Materialien für diese Art von Schutzschichten werden α-Aluminiumoxid (α-Al2O3), Zirkon (ZrSiO4) und Mullit (Al₆Si₂O₁₃) genannt, welche vorzugsweise über ein Sol-Gel-Verfahren oder über Atomlagenabscheidung (englisch: atomic layer deposition, ALD) auf die MoSi₂-Teilchen aufgebracht werden.

In der Praxis hat sich jedoch gezeigt, dass die bislang in eine YSZ-Wärmedämmschicht integrierten Teilchen aus MoSi₂ als selbstheilende Schicht nicht geeignet sind, da die Oxidation des MoSi₂ nicht kontrolliert abläuft und durch die Volumenexpansion des entstehenden SiO₂ zusätzliche Spannungen induziert werden, die zum vorzeitigen Versagen führen. Eine Verbesserung der Lebensdauer bei Betriebsbedingungen konnte bislang noch nicht erbracht werden.

Aus [6] ist eine dreischichtige Wärmedämmschicht sowie ein Verfahren zu dessen Herstellung mit einer Zwischenschicht umfassend MoSi2 bekannt. Diese Wärmedämmschicht weist sehr gute Zyklierungseigenschaften im Unterschied zu herkömmlichen zweischichtigen Wärmedämmschichten (top-coating und bond-coating) auf. Als Aufbringungsverfahren sind atmosphörisches Plasmaspritzen (APS) oder auch Niedrigdruck-Plasmaspritzen (LPPS) möglich.

Ferner ist in [7] ein Verfahren zur Herstellung einer oxidationbeständigen und Plasma gespritzten Mo-Si-Al-Schutzschicht beschrieben, die auf einem Nbₛₛ/Nb₅Si₃-Komposit abgeschieden wird. Diese Schutzschicht umfasst Mo(Si,Al)₂ und Mo₅(Si,Al)₃, welches als Pulver mit einem mittleren Durchmesser von 50 bis 125 µm mittels atmosphärischem Plasmaspritzen auf das Nbₛₛ/Nb₅Si₃-Komposit aufgebracht wird.

### Aufgabe und Lösung

Die Aufgabe der Erfindung ist es, die in einer keramischen Wärmedämmschicht entstehenden Risse während des Betriebs des zu schützenden Bauteils zu heilen und somit ein vorzeitiges Abplatzen der Wärmedämmschicht zu verhindern.

Ferner ist es die Aufgabe der Erfindung, eine neuartige, verbesserte, selbst heilende Wärmedämmschicht zur Verfügung zu stellen, die diese vorgenannten Eigenschaften aufweist, und für den Einsatz in Hochtemperaturprozessen mit Temperaturwechselbeanspruchung geeignet ist.

Ferner ist es die Aufgabe der Erfindung, ein für eine solche selbst heilende Wärmedämmschicht entsprechendes Herstellungsverfahren anzugeben.

Die Aufgaben der Erfindung werden gelöst durch ein Verfahren zur Herstellung einer selbst heilenden Wärmedämmschicht mit den Merkmalen des Hauptanspruchs sowie durch eine selbst heilende Wärmedämmschicht mit den Merkmalen des Nebenanspruchs.

Vorteilhafte Ausgestaltungen des Herstellungsverfahrens oder der Wärmedämmschicht ergeben sich aus den jeweils darauf rückbezogenen Ansprüchen.

### Gegenstand der Erfindung

Im Rahmen der Erfindung wurde herausgefunden, dass die selbst heilenden Eigenschaften einer Wärmedämmschicht, insbesondere einer Zirkonium aufweisenden Wärmedämmschicht, durch die Einbringung von MoSi₂ dadurch deutlich verbessert werden kann, dass bei der Herstellung der Wärmedämmschicht gewisse Rahmenbedingungen eingehalten werden.

Als dafür geeignetes Wärmedämmschichtmaterial kommt insbesondere mit Y₂O₃ stabilisiertes Zirkoniumdioxid in Betracht. Auch mit MgO, Cao oder CeO₂ stabilisiertes Zirkoniumdioxid ist als Wärmedämmschichtmaterial hierfür geeignet. Zudem sind auch weitere Oxide wie beispielsweise MgAl₂O₄, Al₂O_{3,} TiO_{2,} Mullit, La₂Zr₂O₇ oder Gd₂Zr₂O₇ oder auch Y-Si-O Verbindungen als geeignete Wärmedämmschichtmaterialien im Sinne dieser Erfindung einzusetzen.

Zunächst wird im Rahmen der Erfindung vorgeschlagen, MoSi₂-Pulver umfassend Aluminium einzusetzen. Erfindungsgemäß wird für die Ummantelung der selbstheilenden MoSi₂-Partikel mit Aluminiumoxid der Weg der *in-situ* Ummantelung gewählt. Dabei werden die entsprechenden MoSi₂-Partikel, die zusätzlich Aluminium umfassen, zuerst mit Hilfe des atmosphärischen Plasmaspritzens (APS) in die Wärmedämmschicht integriert. Anschließend wird durch eine Wärmebehandlung *in-situ* eine Schutzhülle aus Al₂O₃ um die MoSi₂-Partikel gebildet. Dafür ist es notwendig, dass ein ausreichendes Aluminium-Reservoir in den MoSi₂-Partikeln enthalten ist. Das eingesetzte MoSi₂-Pulver umfasst daher Aluminium mit einem Massenanteil von 2 bis 15 Gew.-%, vorzugsweise mit einem Massenanteil zwischen 3 und 12 Gew.-%.

Optional kann das eingesetzte MoSi₂-Pulver zusätzlich auch noch Bor mit einem maximalen Massenanteil bis zu 2 Gew.-% umfassen.

Ein weiteres Erfordernis des erfindungsgemäßen Verfahrens ist es, dass das MoSi₂-Pulver der Wärmedämmschicht nur von 0.5 Gew.% bis zu einem maximalen Anteil von 5 Gew.-% der Wärmedämmschicht zugesetzt wird.

Anders als bislang in der Literatur beschrieben, kann durch eine geeignete Reduktion des MoSi₂-Gehaltes in der Wärmedämmschicht in Kombination mit der Verringerung der Zersetzung des MoSi₂ bei der Einbringung in die YSZ-Wärmedämmschicht, die Lebensdauer der Wärmedämmschichten im Vergleich zu den standardmäßig verwendeten YSZ-Schichten deutlich verbessert werden.

Erfindungsgemäß erfolgt die Rissfüllung innerhalb der Zirkon aufweisenden Wärmedämmschicht durch die Oxidation von MoSi₂, wodurch SiO₂ gebildet wird. Bei den typischen Betriebstemperaturen des Wärmedämmschicht-Systems liegt dieses in der Regel in einer glasartigen Phase vor, wodurch auch lange Risse gefüllt werden können. Das ebenfalls gebildete MoO₃ liegt während der Betriebstemperatur in der Gasphase vor und dampft entsprechend ab.

Das gebildete SiO₂ kann nach der Versiegelung des Risses mit dem ZrO₂ der Wärmedämmschicht reagieren und Zirkon (ZrSiO₄) bilden. Durch diese Reaktion wird einer erneuten Rissbildung an derselben Stelle entgegengewirkt, da durch die Reaktion keine klare Grenzfläche zwischen den beiden Materialen mehr vorhanden ist, die eine Schwachstelle darstellen könnte. Die entstehenden Risse werden entsprechend durch das entstehende SiO₂ und die anschließende Reaktion zum ZrSiO₄ geheilt.

Als ein weiterer wesentlicher Punkt bei der Herstellung einer selbstheilenden Wärmedämmschicht gemäß dieser Erfindung hat sich die Temperatur des eingebrachten MoSi₂-Pulver herausgestellt. Zur Einstellung dieser geeigneten Temperatur ist vorgesehen, dass die Wärmedämmschicht über atmosphärisches Plasmaspritzen (APS) hergestellt wird und dass neben der Zuführung des eigentlichen Wärmedämmschicht-Pulvers ein zweiter separater Injektionspunkt zur Zuführung des MoSi₂-Pulvers gewählt wird. Dieser zweite Injektionspunkt bewirkt vorteilhaft, dass während des Aufbringens eine Zersetzung von MoSi₂ verhindert werden kann und gleichzeitig das Wärmedämmschichtpulver als Matrixmaterial für die Wärmedämmschicht optimal genutzt wird.

Im Rahmen der Erfindung wurde herausgefunden, dass die Beschichtung mittels MoSi₂ relativ niedrige Plasmagastemperaturen benötigt, um eine Zersetzung des Materials zu verhindern. Auf der anderen Seite muss das Plasmagas eine ausreichende Energie besitzen um das Wärmedämmschicht-Pulver, z. B. YSZ, aufzuschmelzen, wenn homogene Mischschichten aus beiden Materialien hergestellt werden sollen.

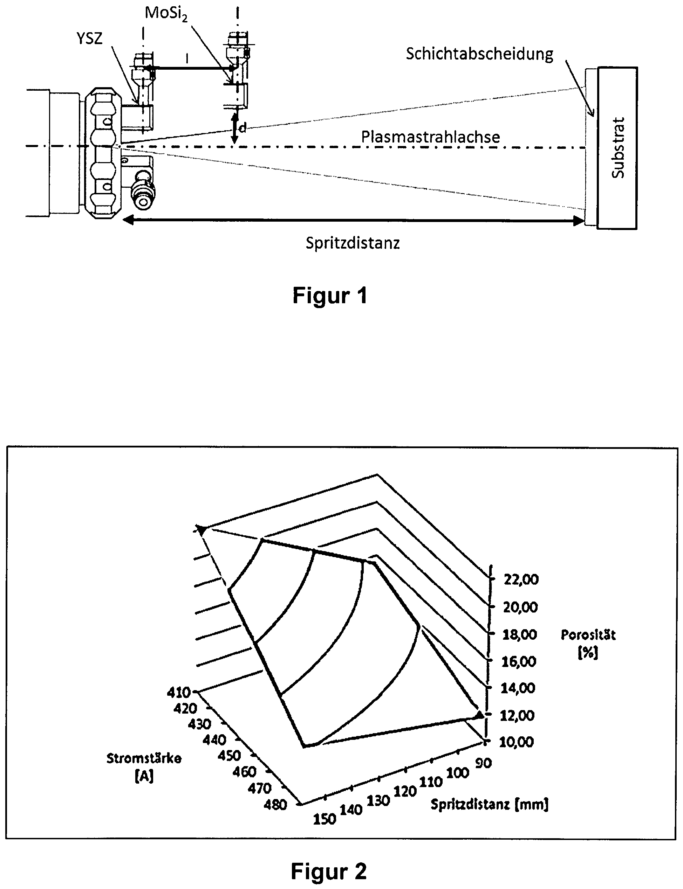

Für das erfindungsgemäße Verfahren zur Herstellung einer selbstheilenden Wärmedämmschicht mittels APS wird daher ein spezielles Injektionsverfahren (Doppelinjektions-System) vorgeschlagen, wie es in Figur 1 schematisch dargestellt ist, und bei dem das MoSi₂-Pulver und YSZ-Pulver als Wärmedämmschicht-Pulver getrennt injiziert werden. Der Zuführungspunkt für das MoSi₂-Pulver liegt dabei an einem in axialer Richtung vom Brenner entfernten zweiten Punkt. Hierfür ist ein spezieller Injektionshalter vorgesehen. Die Injektionsdistanz zwischen der Zuführung von YSZ und MoSi₂ (I) und die Injektionstiefe im Verhältnis zur Plasmastrahl-Achse (d) können bei der APS Apparatur frei eingestellt werden.

Die Temperatur des Plasmas nimmt in Richtung von der Plasmaquelle zu dem zu beschichtenden Substrat ab. Das Plasma weist somit an der Stelle der Zuführung des Wärmedämmschicht-Pulvers regelmäßig eine höhere Temperatur auf, als an der Stelle der Zuführung des MoSi₂-Pulvers.

Im Rahmen dieser Erfindungen wurden insbesondere Untersuchungen mit dem Plasmagas (Ar:He) mit unterschiedlichen Stromstärken und einem Gesamtspritzabstand von ca. 120 mm zur Oberfläche des Substrates durchgeführt. Die Injektionsdistanz wurde dabei zwischen 20 und 50 mm variiert. Dabei zeigte sich bei gewählten Injektionsdistanzen insbesondere oberhalb von 30 mm eine deutliche Verbesserung der Lebensdauer der so hergestellten Wärmedämmschicht.

Beim APS sind viele Parameter, wie Stromstärke, Spritzabstand, Plasmagas, Partikelgrößenverteilung des zugeführten Materials etc. nicht beliebig frei wählbar. Ein Spritzfachmann kennt diese funktionalen Anhängigkeiten und kann entsprechend des eingesetzten Wärmedämmschicht-Pulvers und der verwendeten Apparatur selbst Optimierungen im Sinne der Erfindung vornehmen.

Die Schichtdicke pro Spritzübergang reduziert sich in der Regel mit der Verringerung der Stromstärke, da durch eine geringere Stromstärke ein Plasma mit einer geringeren Energie erzeugt wird. Dadurch werden weniger komplett geschmolzene Partikel gebildet, was zu einer reduzierten Schichtabscheidung führt.

Bei einer Erhöhung der eingestellten Stromstärke muss zur Erzielung derselben Wirkung, insbesondere der zu erzielenden Porosität, insofern auch regelmäßig die Spritzdistanz vergrößert werden. Gleichzeitig sollte hierbei auch die Injektionsdistanz erhöht werden.

Soll die Injektionsdistanz erhöht werden, können einerseits feinere Partikel eingesetzt werden, die Stromstärke erhöht werden und auch die Menge des Fördergases für das MoSi₂-Pulver erhöht werden.

Für eine vergrößerte Spritzdistanz sollte entsprechend die Stromstärke erhöht werden.

Durch eine Vergrößerung der Spritzdistanz haben die dem Plasma zugeführten Teilchen in der Regel mehr Zeit zum Aufschmelzen, bevor sie auf die Oberfläche des Substrates gelangen. Durch die geeignete Wahl der Injektionsdistanz (I) wird erfindungsgemäß sichergestellt, dass für das zugeführte MoSi₂-Pulver nur eine verringerte Spritzdistanz vorliegt, die somit auch den Aufenthalt der MoSi₂-Partikel im Plasmagasstrahl verringert. Auf diese Weise wird sichergestellt, dass einerseits die zugeführten MoSi₂-Partikel zwar auf- oder angeschmolzen werden, jedoch keine Zersetzung des Materials stattfindet während andererseits der Spritzabstand ausreichend ist, um das zugeführte Wärmedämmschicht-Pulver ausreichend aufzuschmelzen.

Die Spritzdistanz und die gewählte Stromstäke haben in Kombination mit dem eingesetzten Pulver zudem einen Einfluss auf die Porosität der abgeschiedenen Schicht.

Will man die Teilchengröße des zugeführten MoSi₂-Pulvers erhöhen, sollte die Injektionsdistanz verringert werden und/oder die Stromstärke entsprechend erhöht werden.

Gleichzeitig hat auch die Wahl des Plasmagases, beispielsweise (Ar:He), (Ar:H₂) oder (Ar:N₂) einen entscheidenden Einfluss auf die einzustellenden Parameter, da je nach Plasmagas unterschiedliche Temperaturen erzeugt werden, d.h. dass eine Veränderung in der Plasmazusammensetzung regelmäßig zu einer Veränderung der Temperatur und der Geschwindigkeit führen.

Für den Einsatz von (Ar:He) wird beispielsweise eine Stromstärke von wenigstens 400 A vorgeschlagen, vorzugsweise von 420 oder 470 A. Dies hängt aber jeweils noch von dem verwendeten Brenner ab. Eine typische Förderrate für das Plasmagas liegt zum Beispiel bei 50 slpm (slmp = Standard-Liter pro Minute).

Für ein kälteres Plasma kann daher die Stromstärke erhöht und/oder die Injektionsdistanz verringert werden. Umgekehrt sollte für ein wärmeres Plasma die Stromstärke verringert und/oder die Injektionsdistanz vergrößert werden.

Für die Parameter des Fördergases für das MoSi₂-Pulver, z. B die Distanz zur Plasmaachse (d) oder die Menge bzw. Geschwindigkeit des Fördergases gilt, dass diese derart gewählt werden sollten, dass das zugeführte MoSi₂-Pulver mittig in den Plasmastrahl injiziert wird. Die Tiefe der Injektion in Bezug auf die Plasmastrahlachse für das MoSi₂-Pulver hat insofern einen Einfluss, da es am Rande des Plasmastrahls regelmäßig zu Verwirbelungen kommt.

Ferner sollte darauf geachtet werden, dass nicht zu viele kleine MoSi₂-Teilchen in der Wärmedämmschicht abgeschieden werden, da bei besonders kleinen Teilchen die Schutzschicht aus Aluminium schlechter ausgebildet werden kann. Als zu kleine Teilchen werden im Rahmen der Erfindung insbesondere solche mit einer Teilchengröße deutlich kleiner als 1 µm verstanden. Kleine Teilchen können zudem häufig zu Schwierigkeiten bei der Förderung und Zuführung des Pulvers führen.

Die Form und Größe der integrierten MoSi₂-Teilchen ist dabei abhängig vom Ausgangspulver und den Spritzparametern. Die Verwendung von Pulver mit einer geeigneten Partikelgrößenverteilung und das leichte Anschmelzen der Partikel im Plasmagasstrahl sind für das erfindungsgemäße Verfahren dabei essentiell. Daher wird für das erfindungsgemäße Verfahren MoSi₂-Pulver mit einem mittleren Teilchendurchmesser (d₅₀) zwischen 5 und 60 µm eingesetzt, vorzugsweise mit einem mittleren Teilchendurchmesser (d₅₀) zwischen 10 und 50 µm.

Erfindungsgemäß werden poröse Wärmedämmschichten abgeschieden, die dieselbe oder eine leicht erhöhte Porosität aufweisen, im Vergleich zu herkömmlich über APS abgeschiedenen Standard Wärmedämmschichten. Die Porositäten von Standard YSZ-Wärmedämmschichten, die mittels APS abgeschieden werden, liegen dabei regelmäßig zwischen 15 und 25 Vol.-%.

Die offene Porosität der erfindungsgemäß abgeschiedenen Wärmedämmschichten wurde dabei mittels Bildanalyse von Aufnahmen von Schichtschliffen bestimmt und liegt zwischen 17 und 20 Vol.-%.

Zur Bestimmung der Lebensdauer der Wärmedämmschichten wurde diese mehrfach thermozykliert. Eine Thermozyklierung umfasst dabei eine 2 stündige Hochtemperaturphase bei ca. 1100 °C gefolgt von einer 15 minutigen Niedrigtemperaturphase bei ca. 60 °C

Die chemische Zusammensetzung der abgeschiedenen Schichten nach dem Spritzen und den eingesetzten Pulvern konnte mit Hilfe der Röntgendiffraktometrie (englisch: X-ray diffraction, XRD) bestimmt werden.

Zudem wurden Untersuchungen mit einem Rasterelektronenmikroskop (REM) vorgenommen, um die Proben genauer auf ihre Mikrostruktur und ihre Zusammensetzung hin zu analysieren. Ferner wurden mikroskopische Probenuntersuchung unter Verwendung eines konfokalen Lasermikroskops durchführt, um eine Information über das Tiefenprofil der Probe zu erhalten.

Zusammengefasst wird die vorteilhafte Wirkung der Erfindung, d. h. eine verbesserte Lebensdauer einer Zirkon aufweisenden Wärmedämmschicht, durch die folgenden Verfahrensschritte erzielt:
- Spritzen von Wärmedämmschicht-Teichen mittels APS unter Auswahl einer ausreichend hohen Stromstärke in Kombination mit einem Plasmagas.
- Gleichzeitiges separates Spritzen von MoSi₂-Teilchen umfassend Aluminium. Dabei wird durch die Wahl der Injektionsdistanz (I) in Kombination mit der Spritzdistanz sichergestellt, dass das Wärmedämmschicht-Material im Plasmastrahl ausreichend aufschmilzt, das zugeführte MoSi₂-Pulver aber nur auf- oder angeschmolzen wird, ohne dass eine Zersetzung des Materials stattfindet.
- Verringerung einer ungewünschten Volumenexpansion durch Einbringung von MoSi₂-Pulver mit einem Massenanteil zwischen 0,5 und 5 Gew.-%.

### Spezieller Beschreibungsteil

Im Weiteren wird die Erfindung an drei Ausführungsbeispielen und einigen Figuren näher erläutert, ohne dass dies zu einer Einschränkung des breiten Schutzumfanges führen soll.

Dabei zeigen:
- Figur 1:: Prinzip der Doppelinjektion, wie sie bei dem erfindungsgemäßen Verfahren eingesetzt wird.
- Figur 2:: Einfluss der Parameter Spritzdistanz und Stromstärke auf die Porosität einer YSZ/MoSi₂- Mischschicht, bei Verwendung von MoSi₂-Pulver mit einem mittleren Teilchendurchmesser von d₅₀ = 20 µm.

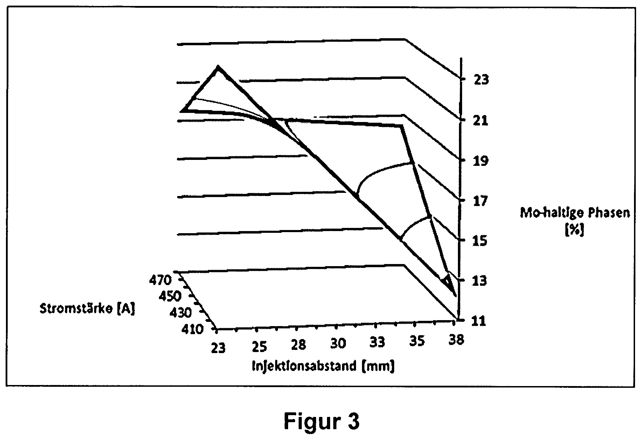

- Figur 3:: Einfluss der Parameter Injektionsdistanz (I) und Stromstärke auf den Gehalt an MoSi₂ und Mo-haltige Phasen am Beispiel einer YSZ/MoSi₂-Mischschicht, bei Verwendung von MoSi₂-Pulver mit einem mittleren Teilchendurchmesser von d₅₀ = 20 µm.

Bei den hier vorgestellten Versuchen wurde eine MultiCoat APS-Anlage eingesetzt. Als Plasmagasbrenner wurde der Dreikathoden-Brenner Triplex Pro 210, welcher auf einem Sechs-Achsen-Roboter befestigt ist, verwendet. Die Zyklierproben wurden zuvor mittels VPS mit einer Haftvermittlerschicht beschichtet. Genutzt wurde ein F4 Plasmagasbrenner (Gesamte Ausrüstung von Oerlikon Metco, Wohlen, Schweiz).

Erste Untersuchungen zur Abscheidung einer YSZ-Wärmedämmschicht mittels APS, bei der ein Pulvergemisch mit einem Massenanteil von 80 Gew.-% YSZ und 20 Gew.-% MoSi₂ eingesetzt wurde, zeigten, dass MoSi₂ nicht in die Schichten integriert wurde. In den Schichten konnte neben YSZ lediglich reines, kubisches Mo nachgewiesen werden, was bedeutet, dass es während des Spritzens nachteilig zu einer Zersetzung des MoSi₂ kommt.

Bei den Proben, welche zur Optimierung der Beschichtungsparameter hergestellt wurden, wurde VA-Stahl als Substrat verwendet. Dieser wurde vor der Beschichtung mittels Sandstrahlen aufgeraut, um eine Verklammerung der Wärmedämmschicht mit dem Substrat zu gewährleisten. Als Substratmaterial für die Zyklierproben wurde einerseits Inconel 738 und andererseits Hastelloy X verwendet. Die Hastelloy X-Substrate wurden als Standardsubstrat genutzt. Als Haftvermittlerschicht wurde regelmäßig Amdry 365 von der Firma HC Starck GmbH, Goslar, Deutschland, verwendet.

Um die Belastbarkeit der erfindungsgemäß produzierten Wärmedämmschicht-Systeme und der Vergleichssysteme zu testen, wurden diese einer thermischen Zyklierung unterzogen. Dadurch können die Belastungen, denen das System später im Gebrauch ausgesetzt ist, simuliert werden. Es wurden dabei zwei unterschiedliche Arten der Zyklierung angewendet.

Zum einen eine isotherme Ofenzyklierung, bei der die gesamte Probe eine gleichmäßige Wärme erfährt, und zum anderen eine Gradientenzyklierung, bei der die Probe von vorne beheizt und von hinten gekühlt wird. Bei einem Gradiententest wird ein thermischer Gradient in der Probe erzeugt, der die späteren Betriebsbedingungen eher widerspiegelt als eine Ofenzyklierung.

### Ausführungsbeispiel:

Mit der vorgenannten MultiCoat APS-Anlage und dem Dreikathoden-Brenner Triplex Pro 210 wurden sowohl Vergleichsschichten (nur YSZ) als auch erfindungsgemäße Wärmedämmschicht hergestellt.
Die Stromstärke betrug dabei 420 A.
Die Spritzdistanz wurde auf 120 mm eingestellt.
Die Injektionsdistanz (I) betrug 40 mm.
Das MoSi₂-Pulver mit einem mittleren Teilchendurchmesser (d₅₀) von 33 µm wurde mittels eines Fördergases mit 7 slpm in den Plasmastrahl injiziert.
Als Plasmagas wurde eine Mischung aus 46:4 slmp (Ar:He) eingesetzt.
Als Wärmedämmschicht-Material wurde YSZ eingesetzt.
Als Haftvermittlerschicht wurde Amdry 365 eingesetzt.
Der MoSi₂-Massenateil betrug 3 Gew-% bezogen auf die YSZ-Wärmedämmschicht.
Der Al-Gehalt im MoSi₂-Pulver lag bei 12 Gew.-%.

Die Lebensdauer der erfindungsgemäß hergestellten MoSi₂-YSZ-Mischschicht lag mit ca. 550 Zyklen (Ofenzyklierung) um ca. 260 % höher, als bei einer vergleichbaren, reinen YSZ-Wärmedämmschicht.

Die Arbeiten, die zu dieser Erfindung geführt haben, wurden unterstützt durch die Europäische Union, 7. Rahmenprogramm [FP7/2007-2013] gemäß Grant Agreement Nr. 309849.

### In dieser Anmeldung zitierte Literatur:

[1] W. G. Schoof, "Self Healing in Coatings at High Temperatures", Springer Series in Materials Science, "Self healing Materials", (2007) Seiten 309 bis 321.
[2] F. Nozahic, D. Monceau, C. Estournes, "Thermal cycling and reactivity of a MoSi2/ZrO2 composite designed for self-healing thermal barrier coatings", Materials and Design 94 (2016) Seiten 444 bis 448.
[3] K. Sonoya, S. Tobe, "Expanding of the fatigue life of thermal barrier coating by mixing MoSi2 to thermal sprayed layer, in Fracture and Strength of Solids, Pts 1 and 2", W. Hwang und K.S. Han, Editors. 2000, Trans Tech Publications Ltd: Zurich-Uetikon. Seiten 909 bis 914.
[4] Z. Derelioglu, A.L. Carabat, G.M. Song, S. van der Zwaag, W.G. Sloof, "On the use of B-alloyed MoSi2 particles as crack healing agents in yttria stabilized zirconia thermal barrier coatings", Journal ofthe European Ceramic Society, Volume 35, Issue 16, December 2015, Seiten 4507 bis 4511.
[5] W. G. Sloof, S. R. Turteltaub, A. L. Carabat, Z. Derelioglu, S. A. Ponnusami & G. M. Song, "Crack healing in yttria stabilized zirconia thermal barrier coatings", Self healing materials - pioneering research in the Netherlands, S. van der Zwaag, E. Brinkman (eds.) IOS Press. 2015, the authors and IOS Press. All rights reserved. DOI: 10.3233/978-1-61499-514-2-217.
[6] K. Sonoya, S. Tobe, "Expanding of the fatigue life of thermal barrier coating by mixing MoSi2 to thermal sprayed layer, in Fracture and Strength of Solids, Pts 1 and 2", W. Hwang und K.S. Han, Editors. 2000, Trans Tech Publications Ltd: Zurich-Uetikon. Seiten 909 bis 914.
[7] DENGZUN YAO ET AL: "Development and oxidation resistance of air plasma sprayed Mo-Si-Al coating on an Nbss/Nb5Si3 in situ composite", CORROSION SCIENCE., Bd. 52, Nr. 8, 1. August 2010 (2010-08-01), Seiten 2603-2611, XP055397429, GB ISSN: 0010-938X, DOI: 10.1016/j.corsci.2010.04.008.

## Patentansprüche

1. Verfahren zur Herstellung einer selbstheilenden Wärmedämmschicht auf einem Substrat mittels atmosphärischen Plasmaspritzens (APS) eines Wärmedämmschicht-Pulvers,
***dadurch gekennzeichnet,***
- **dass** in die Wärmedämmschicht MoSi₂-Pulver umfassend Aluminium eingebracht wird, wobei das MoSi₂-Pulver Aluminium mit einem Gehalt von 2 bis 15 Gew.-% umfasst,
- **dass** MoSi₂-Pulver mit einem Massenanteil zwischen 0,5 und 5 Gew.-% bezogen auf die Wärmedämmschicht eingesetzt wird, und
- **dass** das Wärmedämmschicht-Pulver an einem in axialer Richtung vom Brenner entfernten ersten Punkt injiziert wird und das MoSi₂-Pulver an einem in axialer Richtung vom Brenner weiter entfernten zweiten Punkt in den Plasmastrahl injiziert wird,
- wobei zwischen dem ersten und dem zweiten Punkt eine Injektionsdistanz (I) zwischen 20 und 60 mm eingestellt wird.

2. Verfahren nach Anspruch 1,
bei dem ein Wärmedämmschicht-Pulver, umfassend Zirkoniumdioxid mit Y₂O₃, MgO, CaO oder CeO₂ als Stabilitätskomponente, Al₂O_{3,} TiO_{2,} Mullit, La₂Zr₂O₇, Gd₂Zr₂O₇ oder Y-Si-O eingesetzt wird.

3. Verfahren nach einem der Ansprüche 1 bis 2,
bei dem MoSi₂-Pulver mit einem Gehalt von 3 bis 12 Gew.-% Aluminium eingesetzt wird.

4. Verfahren nach einem der Ansprüche 1 bis 3,
bei dem MoSi₂-Pulver mit einem zusätzlichen Gehalt von bis zu 2 Gew.-% Bor eingesetzt wird.

5. Verfahren nach einem der Ansprüche 1 bis 4,
bei dem MoSi₂-Pulver mit einem mittleren Partikeldurchmesser d₅₀ zwischen 5 µm und 60 µm eingesetzt wird, vorzugsweise mit einem mittleren Partikeldurchmesser d₅₀ zwischen 10 µm und 50 µm.

6. Verfahren nach einem der Ansprüche 1 bis 5,
bei dem zwischen dem ersten und dem zweiten Punkt eine Injektionsdistanz (I) zwischen 30 und 50 mm eingestellt wird.

7. Verfahren nach einem der Ansprüche 1 bis 6,
bei dem als Plasmagas (Ar:He) verwendet und eine Stromstärke von mehr als 400 A eingestellt wird.

8. Verfahren nach einem der Ansprüche 1 bis 7,
bei dem die Wärmedämmschicht auf wenigstens einer zunächst auf dem Substrat abgeschiedenen Haftvermittlerschicht aufgebracht wird.

9. Wärmedämmschicht, herstellbar nach einem der Ansprüche 1 bis 8,
umfassend ein Wärmedämmschicht-Material als Matrix,
sowie MoSi₂-Pulver mit einem Massenanteil von 0,5 bis 5 Gew.-% bezogen auf die Wärmedämmschicht,
und zusätzlich Aluminium mit einem Massenanteil von 2 bis 12 Gew.-% bezogen auf den Masseanteil MoSi₂.

10. Wärmedämmschicht nach vorhergehendem Anspruch 9,
umfassend MoSi₂ mit einem Aluminiumgehalt von 5 bis 10 Gew.-%.

11. Wärmedämmschicht nach einem der vorhergehenden Ansprüche 9 bis 10,
umfassend MoSi₂ mit einem zusätzlichen Gehalt von bis zu 2 Gew.-% Bor.

12. Wärmedämmschicht nach einem der Ansprüche 9 bis 11,
bei dem das eingebrachte MoSi₂ einen mittleren Partikeldurchmesser d₅₀ zwischen 5 µm und 60 µm aufweist, vorzugsweise einen mittleren Partikeldurchmesser zwischen 10 µm und 50 µm.

## Claims

1. A method for manufacturing a self-healing heat insulation layer on a substrate by means of atmospheric plasma spraying (APS) of a heat insulation layer powder,
**characterized in**
- **that** MoSi₂ powder comprising aluminum is introduced into the heat insulation layer, wherein the MoSi₂ powder comprises aluminum with a content of 2 to 15 wt.-%,
- **that** MoSi₂ powder with a mass fraction between 0.5 and 5 wt. % is used, based on the heat insulation layer, and
- **that** the heat insulation layer powder is injected at a first point remote from the burner in an axial direction and that MoSi₂ powder is injected into the plasma jet at a second point further remote from the burner in the axial direction,
- wherein an injection distance (I) between 20 and 60 mm is set between the first and the second point.

2. The method according to claim 1,
wherein a heat insulation layer powder, comprising zirconium dioxide with Y₂O₃, MgO, CaO or CeO₂ is used as stability component, Al₂O_{3,} TiO_{2,} mullite, La₂Zr₂O₇, Gd₂Zr₂O₇ or Y-Si-O.

3. The method according to any one of claims 1 to 2,
wherein MoSi₂ powder with a content of 3 to 12 wt.-% aluminum is used.

4. The method according to any one of claims 1 to 3,
wherein MoSi₂ powder with an additional content of up to 2 wt.-% boron is used.

5. The method according to any one of claims 1 to 4,
wherein MoSi₂ powder with an average particle diameter dso between 5 µm and 60 µm is used, preferably with an average particle diameter d₅₀ between 10 µm and 50 µm.

6. The method according to any one of claims 1 to 5,
- wherein an injection distance (I) between 30 and 50 mm is set between the first and the second point.

7. The method according to any one of claims 1 to 6,
wherein a plasma gas (Ar:He) is used and a current intensity of more than 400 A is set.

8. The method according to any one of claims 1 to 7,
wherein the heat insulation layer is applied to at least one adhesion-promoting layer initially deposited on the substrate.

9. A heat insulation layer, which is manufacturable according to any one of claims 1 to 8,
comprising a heat insulation layer material as matrix,
as well as MoSi₂ powder with a mass fraction of 0.5 to 5 wt.-% based on the heat insulation layer,
and additionally aluminum with a mass fraction of 2 to 12 wt.-% based on the mass fraction MoSi₂.

10. The heat insulation layer according to preceding claim 9,
comprising MoSi₂ with an aluminum content of 5 to 10 wt.-%.

11. The heat insulation layer according to any one of preceding claims 9 to 10,
comprising MoSi₂ with an additional content of up to 2 wt.-% boron.

12. The heat insulation layer according to any one of claims 9 to 11,
wherein the MoSi₂ introduced has an average particle diameter dso between 5 µm and 60 µm, preferably an average particle diameter between 10 µm and 50 µm.

## Revendications

1. Procédé de production d'une couche calorifuge auto-régénératrice sur un substrat au moyen d'une pulvérisation atmosphérique au plasma (APS) d'une poudre de couche calorifuge,
**caractérisé**
- **en ce que** l'on incorpore, dans la couche calorifuge, de la poudre de MoSi₂ comprenant de l'aluminium, la poudre de MoSi₂ comprenant de l'aluminium en une teneur de 2 à 15% en poids,
- **en ce que** l'on utilise de la poudre de MoSi₂ en une proportion en masse comprise entre 0,5 et 5% en poids rapporté à la couche calorifuge, et
- **en ce que** l'on injecte la poudre de couche calorifuge en un premier point éloigné dans la direction axiale du brûleur et en ce que l'on injecte, dans le jet de plasma, la poudre de MoSi₂ en un deuxième point plus éloigné du brûleur dans la direction axiale,
- dans lequel on règle une distance (1) d'injection entre le premier point et le deuxième point comprise entre 20 et 60 mm.

2. Procédé suivant la revendication 1,
dans lequel on utilise une poudre de couche calorifuge, comprenant du dioxyde de zirconium avec Y₂O₃, MgO, CaO ou CeO₂ comme constituant de stabilité, Al₂O_{3,} TiO_{2,} de le mullite, La₂Zr₂O₇, Gd₂Zr₂O7 ou Y-Si-O.

3. Procédé suivant l'une des revendications 1 à 2,
dans lequel on utilise de la poudre de MoSi₂ ayant une teneur en aluminium de 3 à 12% en poids.

4. Procédé suivant l'une des revendications 1 à 3,
dans lequel on utilise de la poudre de MoSi₂ ayant une teneur supplémentaire en bore allant jusqu'à 2% en poids.

5. Procédé suivant l'une des revendications 1 à 4,
dans lequel on utilise de la poudre de MoSi₂ ayant un diamètre d₅₀ moyen de particules compris entre 5 µm et 60 µm, de préférence un diamètre d₅₀ moyen de particules compris entre 10 µm et 50 µm.

6. Procédé suivant l'une des revendications 1 à 5,
dans lequel on règle une distance (1) d'injection entre le premier point et le deuxième point comprise entre 30 et 50 mm.

7. Procédé suivant l'une des revendications 1 à 6,
dans lequel on utilise comme gaz de plasma (Ar:He) et on règle une intensité du courant de plus de 400 A.

8. Procédé suivant l'une des revendications 1 à 7,
dans lequel on dépose la couche calorifuge au moins sur une couche adhésive déposée d'abord sur le substrat.

9. Couche calorifuge pouvant être produite suivant l'une des revendications 1 à 8,
comprenant un matériau de couche calorifuge comme matrice, ainsi que de la poudre de MoSi₂ en une proportion en masse de 0,5 à 5% en poids rapportée à la couche calorifuge,
et supplémentairement de l'aluminium en une proportion en masse de 2 à 12% en poids rapportée à la proportion en masse de MoSi₂.

10. Couche calorifuge suivant la revendication précédente 9,
comprenant du MoSi₂ ayant une teneur en aluminium de 5 à 10% en poids

11. Couche calorifuge suivant l'une des revendications précédentes 9 à 10,
comprenant du MoSi₂ ayant une teneur supplémentaire en bore allant jusqu'à 2% en poids.

12. Couche calorifuge suivant l'une des revendications 9 à 11, dans laquelle le MoSi₂ incorporé a un diamètre dso moyen de particules compris entre 5 µm et 60 µm, de préférence un diamètre moyen de particules compris entre 10 µm et 50 µm.
